# EUROPEAN PATENT APPLICATION

(11) **EP 2 251 825 A1**
(43) Date of publication of application: **17.11.2010**
(21) Application number: 09380041.5
(22) Date of filing: 04.03.2009
(51) Int. Cl.: G06Q 20/00

(54) **System for performing safe telemetric transactions**

(71) Applicant: Prepaytrans Gestion Empresarial, S.L., 28046 Madrid (ES)
(72) Inventor: Martinez Martinez, Javier, 28223 Pozuelo de Alarcon Madrid (ES)
(74) Representative: Temino Ceniceros, Ignacio

(57) **Abstract**

System for performing secure telemetric transactions, associated to a support financial institution, **characterized in that** it comprises:
(a) initial user means (1) configured for requesting and receiving data associated to a credit card, where such data also includes a compatible credit card number, a verification code or CW, an expiration date and a financial transaction amount requested by the user; and
(b) a secondary means (2) for generating the data inherent to a credit card; this data includes a compatible credit card number, a verification code, an expiration date and a financial transaction amount requested by the user; these second means are configured for receiving the request generated by the initial means and for generating card data in a unique and random way.

## Description

The system objective for the performance of safe telemetric transactions, which is the purpose of this invention patent, is about a system that provides a determined user with a series of temporary codes for performing an economical transaction, which is specifically used for this sole transaction. As a minimum, the system comprises a means for generating a code required for financial transactions. For example, a code for a debit, credit or prepaid card, which can be numeric, alphanumeric or alphabetic; a verification code accepted by international networks such as the CVV code, an expiration date and/or a maximum period of time chosen by the user for a determined transaction amount. In this way, absolute confidentiality is achieved for this purchase since the data generated is not associated to their bank or to any specific financial entity that can be subject to fraud.

### DESCRIPTION OF PRIOR ART

The problem with making Internet type telemetric purchases lies essentially with data security and confidentiality, which notably burdens the performance of B2C (*Business to Consumer*) activities and limits the access of potential consumers to this global channel of communications, products and services. Due to these circumstances a series of pay service portals, which guarantee the confidentiality of the data and the identity of Internet buyers have appeared and have exponentially grown since their creation.

These portals make money based on discounts and payment deferments performed by the member portals that accept their conditions for each payment performed with their systems. A paradigmatic case is the one managed by the U.S. Company PAYPAL, INC.

The main limitation is that these platforms can only be used at those portals, which have accepted the same payment system, requiring the buyer to make purchases at businesses, which have also accepted the same system. So, according to the number of buyers registered with the pay platform, the conditions that the platform imposes upon the portals that want to sell to those buyers are stricter regarding discounts and payment deadlines. In the same way, these systems limit the freedom to buy and pay desired for end clients.

The inventors, who are experts in the matter, are not aware of any other system like the one described herein.

### DESCRIPTION OF THE INVENTION

The system for performing safe telemetric transactions, which is the purpose of this invention patent, is associated to a support or financial institution. Support is defined as a card, electronic money, a device, current account or other place where the user has money deposited. This system includes the following:
(a) initial user means configured for requesting and receiving temporary codes for performing financial transactions, preferably the data associated to a credit card or similar support while also including in this data, a compatible credit card number, a verification code or CVV, an expiration date and a financial transaction amount requested by the user; and
(b) secondary means for generating the data inherent to a credit card. This data includes a compatible credit card number, a verification code or CVV, an expiration date and a financial transaction amount requested by the user. These second means are configured for receiving the request generated by the initial means and generating electronic payment data in a unique and random way.

Once the user has received this data and uses it to perform the transaction, the secondary means is configured for validating, storing and canceling the card data, making it impossible to use this data for performing a second transaction.

In the same way and thanks to the system described herein, the final user could also go to a point of sale and pay for a code printed on a ticket, card or similar, avoiding the need to be a member of any system and still be able to preserve their privacy.

As an option, the user does not necessarily have to be a person registered in the system; it can be a financial institution. The members of this financial institution would be the ones who would request card data by means of a code provided by their financial institution. The users would then receive via secondary means, the virtual card data for a specific transaction.

To make general use of the system implies that a user that wishes to use the system as a means for making completely secure payments in environments that do not require a physical credit card (such as the Internet, payments over the phone or other similar types) must be registered in the system (directly or as mentioned before, through the financial institution) or in cases where the user is not registered, purchase the data at a commercial store that is registered as well as posses a support where the transactions managed by the system can be charged/debited. For example, electronically depositing the data into an account or similar, against receipts or the like. Once the user is registered, every time he wants to make a purchase, all he needs to do is ask the system for a specific credit card number compatible with the current standard for example, VISA®, MASTERCARD®, even though the system is valid for any card service present and future, a numeric, alphanumeric or alphabetic verification code like the CVV2 and an expiration date associated to the value of the transaction that is going to be performed. Once the request is performed, the system provides the user with the requested data via the same platform used to make the request or via another compatible platform chosen by the user. When the portal receiving the payment asks for the payment data, the user is now able to input the received data as if it were their own "physical" credit card making it impossible to perform any type of fraud with it.

This system ensures absolute confidentiality of the users financial data making it impossible for fraud to occur derived from the capturing of credit card numbers. Likewise, it is impossible to perform duplicate operations since the number received for performing this transaction does not have any more credit than the one specifically requested for that transaction even though we must point out that data for a determined amount can be requested and several operations can be performed until the balance requested has been used up. The expiration of the codes is also a basic security factor and an evident advantage with respect to the current state of the art.

Other additional advantages are the ones derived from the freedom to buy and the fact that this system is universal since it can be used at any establishment that accepts credit cards.

During the description and claims, the word "comprises" and its synonyms do not intend to exclude other technical characteristics, additions, components or steps. For the experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred performances indicated herein.

### BRIEF DESCRIPTION OF THE DRAWINGS

FIG. 1 shows a diagram representing the system architecture for the performance of secure telemetric transactions, which is the objective of this invention.
FIG. 2 shows a flow diagram of the procedures for registering with the telemetric transactions code issuing entity.
FIG. 3 shows a flow diagram of a generic operation between this invented system with an associated financial institution.
FIG. 4 shows a flow diagram of a generic purchase operation performed with this invented system.

### PREFERRERD EMBODIMENT OF THE INVENTION

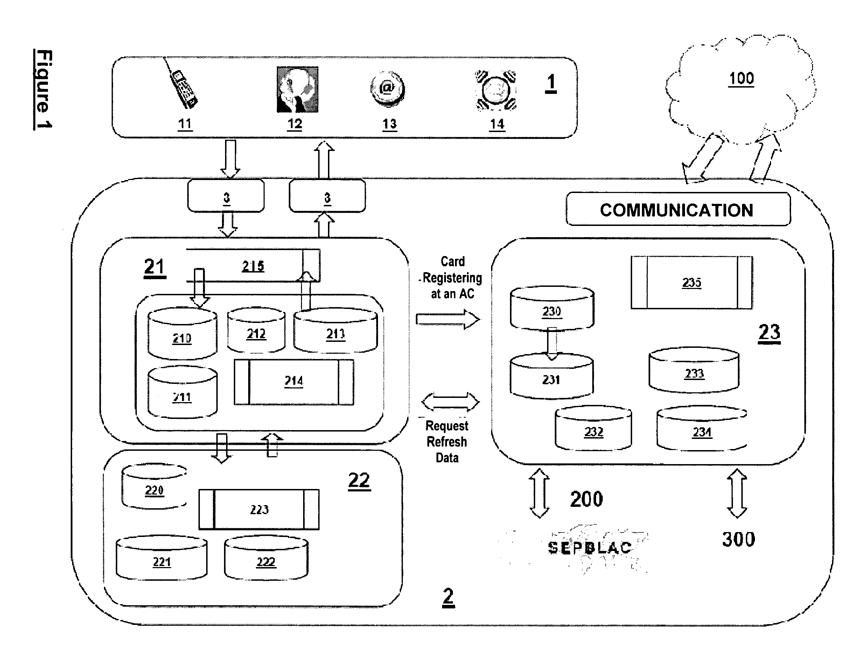

As can be seen in figure 1, the system for performing secure telemetric transactions, associated to a support or financial institution is characterized by comprising the following:
(a) initial user means 1 configured for requesting and receiving data related to an electronic payment media, preferably a credit, debit or similar card, where such data also includes a compatible credit card number, a verification code or CVV, which can be numeric, alphanumeric or alphabetic, an expiration date and a financial transaction amount requested by the user; and
(b) secondary means 2 for generating the data inherent to an electronic payment medium, for example a credit card. This data includes a code compatible with an electronic payment medium, for example a compatible credit card number, a verification code or CVV, an expiration date and a financial transaction amount requested by the user. These second means 2 are configured for receiving the request generated by the initial means 1 and generating electronic payment data in a unique and random way.

These initial means 1, as can be seen in figure 1 are made up of different types. Between these different types we can highlight:
- Mobile phones 11, where communication is performed via different channels like GSM, GPRS, WAP, SMS or other equivalent methods.
- A call center 12, performed through a Tele-Operator.
- Through electronic mail 13.
- Through various Internet portals 14.
   These first means 1 communicate with the second means 2 through a security module 3 configured to encrypt the communication and prevent any type of fraud.

The second means 2 for generating data associated to a payment method for example, a credit card in this example are themselves divided into different modules. The second means 2 consist of at least:
(i) An initial payment method data generation driver module 21 for example, a credit card that has a database configured for storing the numbers generated by the card 210, the card expiration dates 211, the verification codes 212 and the generated cards 213, where this database is managed by a control algorithm 214 configured for receiving the data request and generating this card data in a unique and random way, storing the generated data in the database and preventing this data from being used more than once. This initial driver module 21 also communicates with the initial user means through a communications controller 215.
(ii) A second users management module 22 configured to relate the cards generated in the first module with a specific user. This second module has a user 220, performed operations 221 and movements 222 database. This database is managed by a request control algorithm 223 that communicates with the initial generation driver module 21; and
(iii) A third authorized module or authorization center 23 where the card generated in the initial module 21 is registered and where communications with financial networks 100, money laundering control 200 and bank regulatory entity 300 are centralized. This authorization center 23 also comprises:
   (a) A database configured to contain at least the card authorizations 230, the authorization movements 231, the activity record 232, authorization criteria 233 and registered operations 234; and
   (b) Means configured for card authorization and the decision-making authorization for this financial transaction 235.

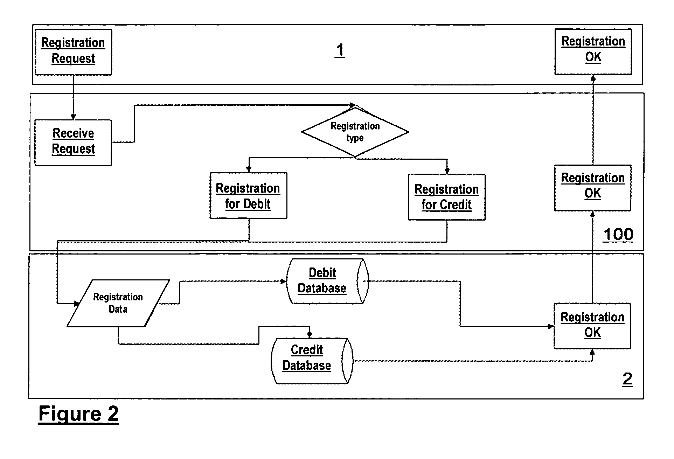

Figure 2 shows in greater detail, how the process to register a user in the system, object of this invention works (through the initial user means 1). In this case, the user requests to be registered through a financial institution 100. This institution receives the request and decides whether or not to grant them a line of credit (sales until the line of credit is spent) or grant them a debit account (sales against another credit card and/or the user's current account). The institution then sends the data to the system (specifically to the second means for generating data 2), and even more specifically to the second user management module 22, where they are stored in the user database 220 with their characteristics. Then, registration acceptance is communicated to the financial institution 100 and to the user 1.

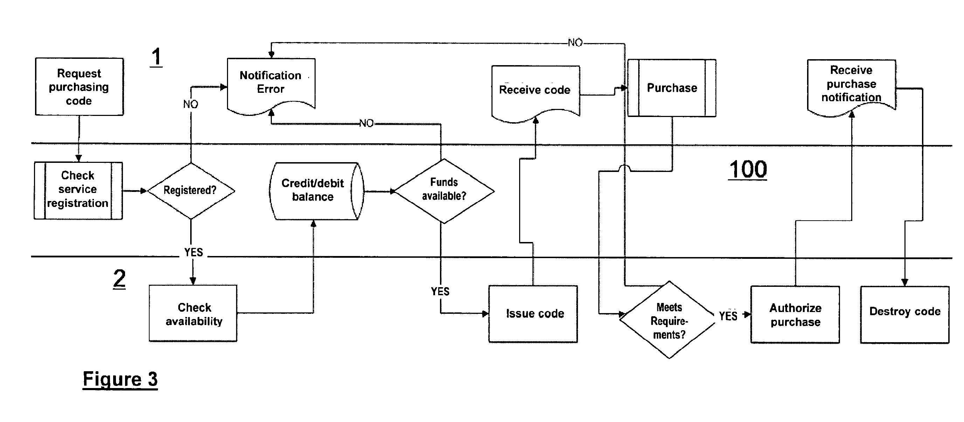

Figure 3 describes a generic operation with an associated entity. In this operation, the user requests the purchasing codes (with the initial means 1) from the associated entity 100, who in turn checks service registration. If the user is indeed registered, the user database is checked and the second means 2 and more specifically the authorization center 23 requests from the associated entity 100 the credit/debit amount that the particular user has available at the financial institution 100 and issues the code if the user indeed has enough available funds. Once the codes are issued, the user receives the codes through any means 11, 12, 13, 14 requested by the user. This transaction must be authorized at the authorization center 23 where the requirements are checked for this transaction and subsequently authorizing this transaction, communicating it to the user and destroying the generated code.

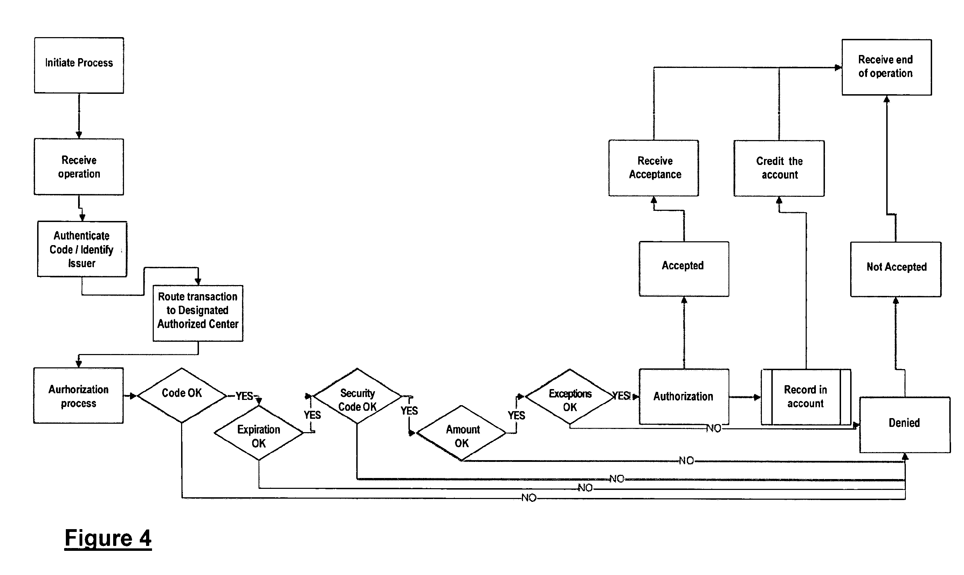

The transaction process with the entity in charge of this transaction and/or sale, once the user has the code generated by the system, as shown in figure 4 is the following. First, the user initiates the process at the initial user means 1, specifically under the means selected by the user (11, 12, 13, 14). Afterwards, the entity in charge of the transaction receives the operation and, on line, authenticates the code and identifies the issuer. The entity then routes the transaction to the second means 2, specifically to the authorization center 23 where if the code is correct, and the security codes are correct for the designated transaction amount, the transaction is authorized, it is recorded in the users account and the operation authorization is issued and communicated to the user. Simultaneously, the account of the entity in charge of the transaction and/or sale is credited. In case one of the conditions fail, the operation is denied and communicated to the user.

As an option, the system allows the authorization center 23 to include exceptions previously listed in the registration process where the conditions in which some type of transaction cannot be performed is listed for each user preventing an inadequate use of the system.

## Claims

1. System for performing secure telemetric transactions, associated to a support or financial institution, **characterized by** comprising:
(a) initial user means (1) configured for requesting and receiving data related to an electronic payment media, where such data also includes a series of codes which can be numeric, alphanumeric and/or alphabetic and a financial transaction amount requested by the user; and
(b) secondary means for generating the data (2) inherent to an electronic payment method, where such data also includes a series of codes that can be numeric, alphanumeric and/or alphabetic and a financial transaction amount requested by the user; and these second means are configured for receiving the request generated by the initial means and generating card data in a unique and random way;
and also, where, once the user has received this data and uses it to perform the transaction, the secondary means is configured for validating, storing and canceling the card data, making it impossible to use this data for performing a second transaction.

2. System in accordance with claim 1 where the electronic payment method is performed with a credit, debit or prepaid card.

3. System in accordance with claims 1 and 2 where the numeric, alphanumeric and/or alphabetic codes correspond to a compatible credit card number, a verification code or CVV and an expiration date associated with the credit, debit or prepaid card corresponding to the electronic payment method.

4. System in accordance with claims 1 and 3 where if the user is a financial entity, the users of this financial entity send their card data requests by means of a user code provided by the financial entity.

5. System in accordance with the preceding claims where these initial user means is at least one selected between:
- mobile phones where communication is performed via different channels like GSM, GPRS, WAP, SMS or other equivalent methods.
- call center performed through a Tele-Operator.
- electronic mail.
- through various Internet portals, and
- a combination of the above.

6. System in accordance with the preceding claims where these initial user means communicate with the second means through a security module configured to encrypt these communications.

7. System in accordance with the preceding claims where these second means of data generation associated to a credit card are themselves divided into different modules consisting of at least:
(i) an initial payment method data generation driver module associated to a credit card that has a database configured for storing the numbers generated by the card, the card expiration dates, the verification codes and the generated cards, where this database is managed by a control algorithm configured for receiving the data request and generating this card data in a unique and random way, storing the generated data in the database and preventing this data from being used more than once; in which this initial driver module also communicates with the initial user means through a communications controller.
(ii) a second user management module configured to relate the cards generated in the first module with a specific user; this second module has a user, performed operations and movements database, managed by a request control algorithm that communicates with the initial generation driver module; and
(iii) a third authorization module or authorization center where the card generated in the initial module is registered and where communications with financial networks, money laundering control and bank regulatory entity are centralized, where this authorization center also comprises:
(a) a database configured to contain at least the card authorizations, the authorization movements, the activity record, authorization criteria and registered operations; and
(b) means configured for card authorization and the decision-making authorization for this financial transaction.
